# EUROPEAN PATENT APPLICATION

(11) **EP 2 584 838 A1**
(43) Date of publication of application: **24.04.2013**
(21) Application number: 10854880.1
(22) Date of filing: 20.07.2010
(51) Int. Cl.: H04W 36/30

(54) **METHOD AND SYSTEM FOR PROCESSING TRANSMISSION GAP PATTERN SEQUENCE**

(71) Applicant: ZTE Corporation, Shenzhen, Guangdong 518057 (CN)
(72) Inventor: CHENG, Xiang, Shenzhen Guangdong 518057 (CN)
(74) Representative: Jansen, Cornelis Marinus
(86) International application number: PCT/CN2010/075295
(87) International publication number: WO 2012/009850

(57) **Abstract**

A method for processing a transmission gap pattern sequence is disclosed. A terminal or a Node B controls an initiation of a transmission gap pattern sequence. The terminal or the Node B performs an operation of initiating a new transmission gap pattern sequence by way of superimposing on currently initiated transmission gap pattern sequences or by way of clearing all currently initiated transmission gap pattern sequences. The terminal or the Node B controls a stop of the transmission gap pattern sequence. The terminal or the Node B performs the operation of stopping a transmission gap pattern sequence by way of stopping a specified transmission gap pattern sequence or by way of stopping all currently initiated transmission gap pattern sequences. A system for processing a transmission gap pattern sequence is disclosed. With the method and the system, the time for initiating a compressed mode is delayed and the duration of the compressed mode is reduced, thus system capacity and user throughput are improved.

## Description

### TECHNICAL FIELD

The disclosure relates to the field of radio communications, and more particularly, to a method and a system for processing a transmission gap pattern sequence.

### BACKGROUND

With the continuous evolution of radio communication network technology, from the second generation of Global System for Mobile (GSM) to the third generation of Wideband Code Division Multiple Access (WCDMA) system, and then to the third generation of Enhanced Universal Radio Access (E-UTRA) system, the network deployment of operators has to have multiple modes of systems coexisted according to user requirements. At present, the common radio network functions of the operator are set to be: the second generation of GSM system is mainly used to bear voices; the third generation of WCDMA system is mainly used to bear packet domain services, session services and video services; and the third generation of E-UTRAN system is mainly used to bear high-speed packet domain services.

Therefore, for the present network deployment, the mobility between the second generation of GSM system and the third generation of WCDMA system is very important. In addition, the mobility management of the third generation of E-UTRA system, for example, handover to hot areas of the E-UTRA system, would become important in the near future. Moreover, inter-frequency handover based on load balance between each layer of carrier frequency is also necessary in a multi-carrier frequency network.

The handover processes caused by the inter-system mobility management mentioned above and by the load balance between each layer of carrier frequency all need to perform measurements on a target system and a target carrier frequency in a predetermined handover preparation phase, so as to execute a handover policy accurately.

Compressed mode plays a very important role in the inter-carrier frequency measurement and the inter-system measurement. When applying a compressed mode, a terminal can measure the carrier frequency not in service and the carrier frequency of other systems, without configuring double receivers. When a terminal, which is configured with only one receiver, moves from the third generation of WCDMA system to an area which is covered by the second generation of GSM system only, the terminal can only adopt the compressed mode to perform the inter-system measurement. Similarly, the compressed mode also can be used for the terminal to enter into/exit from a multi-carrier frequency coverage area of the third generation of WCDMA system. In the compressed mode, a terminal can measure another carrier frequency not in service without losing any data transmitted on the serving carrier frequency.

The compressed mode is defined as a transmission mode, through which data transmission is compressed to generate a transmission gap in time domain. The receiver of the terminal can switch to another carrier frequency to perform a measurement within this transmission gap.

The transmission gap is described and determined by a transmission gap pattern sequence. Each set of transmission gap pattern sequence is uniquely identified by a transmission gap pattern sequence identifier and can only be used for one transmission gap pattern sequence measurement purpose, which is one of following measurement purposes: Frequency Division Duplex (FDD) measurement, Time Division Duplex (TDD) measurement, GSM Carrier Received Signal Strength Indication measurement, GSM Initial Base Station Identity Code Identification, GSM Base Station Identity Code Identification Reconfirmation, multi-carrier frequency measurement, E-UTRA measurement and the like.

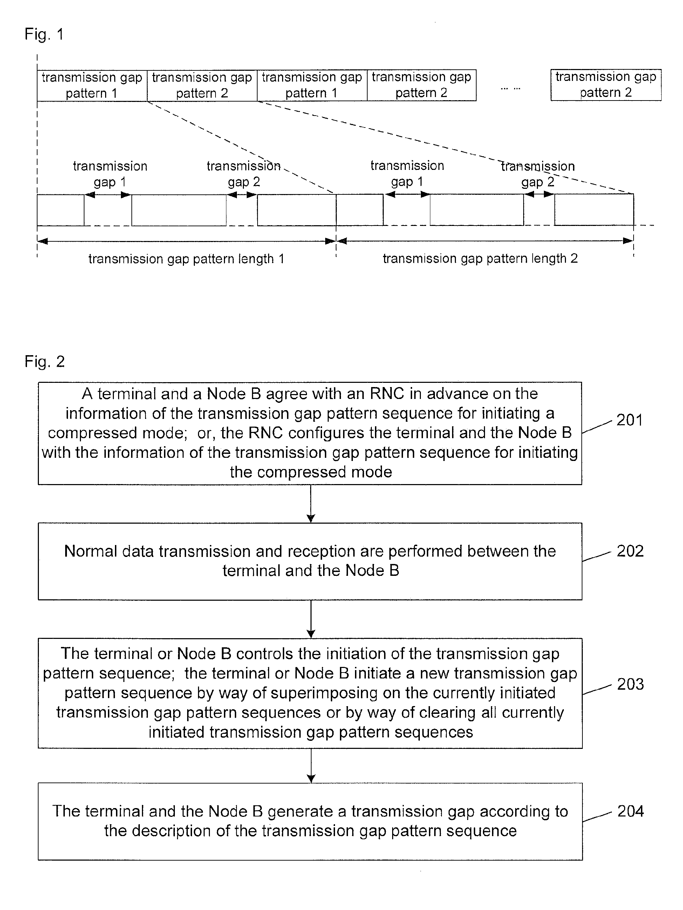

Each set of transmission gap pattern sequence, as shown in Fig. 1, includes two alternate patterns, which are transmission gap pattern 1 and transmission gap pattern 2. Each transmission gap pattern provides one or two transmission gaps in one transmission gap pattern length. In addition, each set of transmission gap pattern sequence further includes a transmission gap Connection Frame Number (CFN) for indicating the time of initiating/stopping the compressed mode, repeat times of the transmission gap pattern sequence, etc. These parameters are determined according to the transmission gap pattern sequence measurement purpose.

Each transmission gap pattern sequence measurement purpose needs one set of transmission gap pattern sequence, so when multiple measurements are performed simultaneously, for example, when the GSM Carrier Received Signal Strength Indication measurement and the GSM Initial Base Station Identity Code Identification are performed simultaneously, two sets of transmission gap pattern sequences might be performed in parallel. In this condition, it is necessary to guarantee that the two sets of transmission gap pattern sequences are not overlapped, or, transmission gaps described and determined by each set of transmission gap pattern sequence are not located in one same radio frame. Otherwise, the terminal cannot perform related measurements of the overlapped transmission gap pattern sequence.

In the prior art, the initiation and stop of the compressed mode are controlled by a Radio Network Controller (RNC). A terminal reports to the RNC the quality of the radio signal of a current serving cell/carrier frequency (if the quality of the radio signal of the current serving cell/carrier frequency is lower than a certain threshold). The RNC determines whether to perform an inter-carrier frequency/inter-system measurement (if the quality of the radio signal of the current serving cell is poor, it might be needed to prepare for the handover to an inter-carrier frequency/inter-system adjacent cell). If it is needed to perform the inter-carrier frequency/inter-system measurement, the RNC notifies a Node B and the terminal of the initiated transmission gap pattern sequence. Then the Node B does not transmit data within each transmission gap described and determined by the transmission gap pattern sequence, and the terminal does not receive data within each transmission gap described and determined by the transmission gap pattern sequence but performs the inter-carrier frequency/inter-system measurement for the transmission gap pattern sequence measurement purpose. After obtaining the measurement result of the inter-carrier frequency/inter-system measurement performed by the terminal, the RNC can decide to stop the transmission gap pattern sequence and notifies the Node B and the terminal. Subsequently, the Node B and the terminal exit from the compressed mode and perform normal data reception and transmission.

In the above process, generally it is needed to initiate the compressed mode in advance in engineering, that is to say, the initiation threshold of the compressed mode needs to be set to be easily triggered, so that before the terminal drops calls (that is, during the period capable of maintaining the terminal calls) there is enough time to complete the inter-carrier frequency/inter-system measurement. However, in this way, the coverage boundary of cell is reduced, the coverage of cell cannot be utilized effectively, the duration of the compressed mode is relatively long, which damages the system capacity and the user throughput.

### SUMMARY

In view of the above, the main purpose of the disclosure is to provide a method and a system for processing a transmission gap pattern sequence, so as to solve the problem in the prior art that long duration of the compressed mode damages the system capacity and the user throughput.

In order to achieve the purpose above, the disclosure provides the following technical solutions.

The disclosure provides a method for processing a transmission gap pattern sequence, which includes:
controlling an initiation of a transmission gap pattern sequence by a terminal or a Node B, wherein the terminal or the Node B performs an operation of initiating a new transmission gap pattern sequence by way of superimposing on currently initiated transmission gap pattern sequences or by way of clearing all currently initiated transmission gap pattern sequences; and
controlling a stop of the transmission gap pattern sequence by the terminal or the Node B, wherein the terminal or the Node B performs an operation of stopping a transmission gap pattern sequence by way of stopping a specified transmission gap pattern sequence or by way of stopping all currently initiated transmission gap pattern sequences.

Before performing the operation of initiating a new transmission gap pattern sequence, the method further includes:
agreeing with an RNC in advance on information of the transmission gap pattern sequence for initiating a compressed mode, by the terminal and the Node B; or, configuring the terminal and the Node B with the information of the transmission gap pattern sequence for initiating the compressed mode, by the RNC;
wherein the information of the transmission gap pattern sequence for initiating the compressed mode includes: information of one or more sets of transmission gap pattern sequences; wherein the information of each set of transmission gap pattern sequence at least includes: transmission gap pattern sequence identifier, transmission gap pattern sequence measurement purpose, transmission gap pattern 1 and/or transmission gap pattern 2, information of transmission gap provided by each type of transmission gap pattern in one transmission gap pattern length, and repeat times of the transmission gap pattern.

The method further includes:
configuring the terminal with the information of the transmission gap pattern sequence for initiating the compressed mode through Radio Resource Control (RRC) protocol layer control signaling, by the RNC; and configuring the Node B with the information of the transmission gap pattern sequence through Node B Application Part (NBAP) protocol layer control signaling, by the RNC.

The method further includes:
notifying, by the terminal, the Node B through a High Speed Dedicated Physical Control Channel (HS-DPCCH) that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

The method further includes:
notifying, by the Node B, the terminal through a High Speed Shared Control Channel (HS-SCCH) order that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

The disclosure further provides a system for processing a transmission gap pattern sequence, which includes a terminal and a Node B. The terminal or the Node B is configured to: control an initiation of a transmission gap pattern sequence, wherein the terminal or the Node B performs an operation of initiating a new transmission gap pattern sequence by way of superimposing on currently initiated transmission gap pattern sequences or by way of clearing all currently initiated transmission gap pattern sequences; control a stop of the transmission gap pattern sequence, wherein the terminal or the Node B performs an operation of stopping a transmission gap pattern sequence by way of stopping a specified transmission gap pattern sequence or by way of stopping all currently initiated transmission gap pattern sequences.

The system further includes an RNC. The RNC is configured to agree with the terminal and the Node B in advance on the information of the transmission gap pattern sequence for initiating a compressed mode, or to configure the terminal and the Node B with the information of the transmission gap pattern sequence for initiating the compressed mode.

The information of the transmission gap pattern sequence for initiating the compressed mode includes: information of one or more sets of transmission gap pattern sequences. The information of each set of transmission gap pattern sequence at least includes: transmission gap pattern sequence identifier, transmission gap pattern sequence measurement purpose, transmission gap pattern 1 and/or transmission gap pattern 2, information of transmission gap provided by each type of transmission gap pattern in one transmission gap pattern length, and repeat times of the transmission gap pattern.

The RNC is further configured to configure the terminal with the information of the transmission gap pattern sequence for initiating the compressed mode through RRC protocol layer control signaling, and to configure the Node B with the information of the transmission gap pattern sequence through NBAP protocol layer control signaling.

The terminal is further configured to notify the Node B through an HS-DPCCH that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

The Node B is further configured to notify the terminal through an HS-SCCH order that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

According to the method and the system for processing a transmission gap pattern sequence, the initiation and stop of the transmission gap pattern sequence are controlled by a terminal or a Node B. The terminal or the Node B performs the operation of initiating a new transmission gap pattern sequence by way of superimposing on the currently initiated transmission gap pattern sequences or by way of clearing all currently initiated transmission gap pattern sequences. The terminal or the Node B performs the operation of stopping a transmission gap pattern sequence by way of stopping the specified transmission gap pattern sequence or by way of stopping all currently initiated transmission gap pattern sequences. According to the disclosure, the time for initiating a compressed mode is delayed, which can reduce the duration of the compressed mode, thus the system capacity and user throughput are improved.

### BRIEF DESCRIPTION OF THE DRAWINGS

Fig. 1 shows a diagram of a transmission gap pattern sequence in the prior art;
Fig. 2 shows a flowchart of a method for processing a transmission gap pattern sequence of the disclosure;
Fig. 3 shows a flowchart of a method for processing a transmission gap pattern sequence in Embodiment 1 of the disclosure;
Fig. 4 shows a flowchart of a method for processing a transmission gap pattern sequence in Embodiment 2 of the disclosure;
Fig. 5 shows a flowchart of a method for processing a transmission gap pattern sequence in Embodiment 3 of the disclosure;
Fig. 6 shows a flowchart of a method for processing a transmission gap pattern sequence in Embodiment 4 of the disclosure;
Fig. 7 shows a flowchart of a method for processing a transmission gap pattern sequence in Embodiment 5 of the disclosure;
Fig. 8 shows a flowchart of a method for processing a transmission gap pattern sequence in Embodiment 6 of the disclosure;
Fig. 9 shows a flowchart of a method for processing a transmission gap pattern sequence in Embodiment 7 of the disclosure;
Fig. 10 shows a flowchart of a method for processing a transmission gap pattern sequence in Embodiment 8 of the disclosure;
Fig. 11 shows a flowchart of a method for processing a transmission gap pattern sequence in Embodiment 9 of the disclosure;
Fig. 12 shows a flowchart of a method for processing a transmission gap pattern sequence in Embodiment 10 of the disclosure;
Fig. 13 shows a flowchart of a method for processing a transmission gap pattern sequence in Embodiment 11 of the disclosure; and
Fig. 14 shows a flowchart of a method for processing a transmission gap pattern sequence in Embodiment 12 of the disclosure.

### DETAILED DESCRIPTION

The technical solutions of the disclosure are further detailed below in conjunction with accompanying drawings and embodiments.

Quickening handover process can improve the reliability of handover, particularly in an area where the quality of radio signal quickly deteriorates, the risk of dropping calls of a user can be reduced by quickening the handover process. Therefore, the later the compressed mode is initiated, the better; the shorter the compressed mode lasts, the better. In this way, both system capacity and user throughput can be improved. A method for processing a transmission gap pattern sequence provided by the disclosure, as shown in Fig. 2, mainly includes the following steps:
Step 201: A terminal and a Node B agree with an RNC in advance on the information of the transmission gap pattern sequence for initiating a compressed mode; or, the RNC configures the terminal and the Node B with the information of the transmission gap pattern sequence for initiating the compressed mode.

The RNC can configure the terminal with the information of the transmission gap pattern sequence for initiating the compressed mode through RRC protocol layer control signaling, and configure the Node B with the information of the transmission gap pattern sequence through NBAP protocol layer control signaling.

The information of the transmission gap pattern sequence for initiating the compressed mode specifically includes the information of one or more sets of transmission gap pattern sequences. The information of each set of transmission gap pattern sequence at least includes: transmission gap pattern sequence identifier, transmission gap pattern sequence measurement purpose, transmission gap pattern 1 and/or transmission gap pattern 2, the information of transmission gap provided by each type of transmission gap pattern in one transmission gap pattern length, and the repeat times of the transmission gap pattern.

Step 202: Data transmission and reception are performed between the terminal and the Node B.

Step 203: The terminal or Node B controls the initiation of the transmission gap pattern sequence. The terminal or Node B performs the operation of initiating a new transmission gap pattern sequence by way of superimposing on the currently initiated transmission gap pattern sequences or by way of clearing all currently initiated transmission gap pattern sequences.

Step 204: The terminal and the Node B generate a transmission gap according to the description of the transmission gap pattern sequence.

During this process, the terminal or the Node B controls the stop of the transmission gap pattern sequence. The terminal or the Node B performs the operation of stopping a transmission gap pattern sequence by way of stopping a specified transmission gap pattern sequence or by way of stopping all currently initiated transmission gap pattern sequences.

The above method for processing the transmission gap pattern sequence is detailed below in conjunction with embodiments.

It should be noted that, in each of the following embodiments, the transmission gap pattern sequence identifier mentioned above is encoded by 3 bits, whose value falls in the range of 0 to 7, that is, 8 values totally. The transmission gap pattern sequence identifier with the value of 0 is regulated to be reserved, indicating all currently initiated transmission gap pattern sequences and being used only when the terminal or the Node B performs the operation of stopping a transmission gap pattern sequence. The rest 7 values from 1 to 7 are used as the transmission gap pattern sequence identifier, and each set of transmission gap pattern sequence is uniquely identified by a transmission gap pattern sequence identifier.

In each of the following embodiments, the initiation or stop of the transmission gap pattern sequence is indicated through encoding one bit. When the bit takes the value of 1, it is indicated to initiate, and when the bit takes the value of 0, it is indicated to stop.

In each of the following embodiments, both the way of superimposing on the currently initiated transmission gap pattern sequences and the way of clearing all currently initiated transmission gap pattern sequences are indicated through encoding one bit. When this bit takes the value of 1, it is indicated to superimpose on the currently initiated transmission gap pattern sequences, hereinafter called Superimposing way; when this bit takes the value of 0, it is indicated to clear all currently initiated transmission gap pattern sequences, hereinafter called Clear way.

HS-DPCCH is a control channel in uplink direction and is used to bear the feedback information for Acknowledgement/Negative Acknowledgement (ACK/NACK) of successful reception of downlink data and to bear the quality feedback information of the reception quality of downlink data. In the HS-DPCCH, the domain for bearing the ACK/NACK information of downlink data reception condition is called a "Confirmation" domain, which consists of 10 bits. In the prior art, only part of the encoded values are used.

In the following embodiments involving the HS-DPCCH, the unused encoded part in the 10-bit "Confirmation" domain of the HS-DPCCH is used. When the first bit takes the value of 1 and the second bit takes the value of 0 in the "Confirmation" domain, all encoded values of the rest 8 bits from all 0 to all 1 are not used. In each of the following embodiments involving the HS-DPCCH, when the first bit takes the value of 1 and the second bit takes the value of 0 in the "Confirmation" domain, the third, fourth and fifth bits of the "Confirmation" domain are used to indicate the transmission gap pattern sequence identifier (wherein the transmission gap pattern sequence identifier with the value of 0 is regulated to be reserved, indicating all currently initiated transmission gap pattern sequences and being used only when the terminal or Node B performs the operation of stopping a transmission gap pattern sequence; the rest 7 values from 1 to 7 are used for indicating the transmission gap pattern sequence identifier, and each set of transmission gap pattern sequence is uniquely identified by a transmission gap pattern sequence identifier); the sixth bit of the "Confirmation" domain is used to indicate the initiation or stop of the transmission gap pattern sequence (when the bit takes the value of 1, it is indicated to initiate, and when the bit takes the value of 0, it is indicated to stop); the seventh bit of the "Confirmation" domain is used to indicate Superimposing way or Clear way (this bit is used only when the terminal or Node B performs the operation of initiating a transmission gap pattern sequence; when this bit takes the value of 1, it is indicated Superimposing way, and when the bit takes the value of 0, it is indicated to Clear way).

HS-SCCH is a control channel in downlink direction and is used to bear the information needed by demodulation of a High Speed Downlink Shared Channel (HS-DSCH). The Node B can send an HS-SCCH order to the terminal through the HS-SCCH, ordering the terminal to perform corresponding control. The HS-SCCH order totally has 6 bits. In the prior art, only part of the encoded values is used.

In each of the following embodiments involving the HS-SCCH order, the unused encoded part of the six bits in the HS-SCCH order is used. When the first bit of the 6 bits in the HS-SCCH order takes the value of 1, all encoded values of the rest 5 bits from all 0 to all 1 are not used. In each of the following embodiments involving the HS-SCCH order, when the first bit of the 6 bits in the HS-SCCH order takes the value of 1, the second, third and fourth bits of the 6 bits in the HS-SCCH order are used to indicate the transmission gap pattern sequence identifier (wherein the transmission gap pattern sequence identifier with the value of 0 is regulated to be reserved, indicating all currently initiated transmission gap pattern sequences and being used only when the terminal or Node B performs the operation of stopping a transmission gap pattern sequence; the rest 7 values from 1 to 7 are used for indicating the transmission gap pattern sequence identifier, and each set of transmission gap pattern sequence is uniquely identified by a transmission gap pattern sequence identifier); the fifth bit of the 6 bits in the HS-SCCH order is used to indicate the initiation or stop of the transmission gap pattern sequence (when the bit takes the value of 1, it is indicated to initiate, and when the bit takes the value of 0, it is indicated to stop); the sixth bit of the 6 bits in the HS-SCCH order is used to indicate Superimposing way or Clear way (this bit is used only when the terminal or Node B performs the operation of initiating a transmission gap pattern sequence; when this bit takes the value of 1, it is indicated Superimposing, and when the bit takes the value of 0, it is indicated Superimposing).

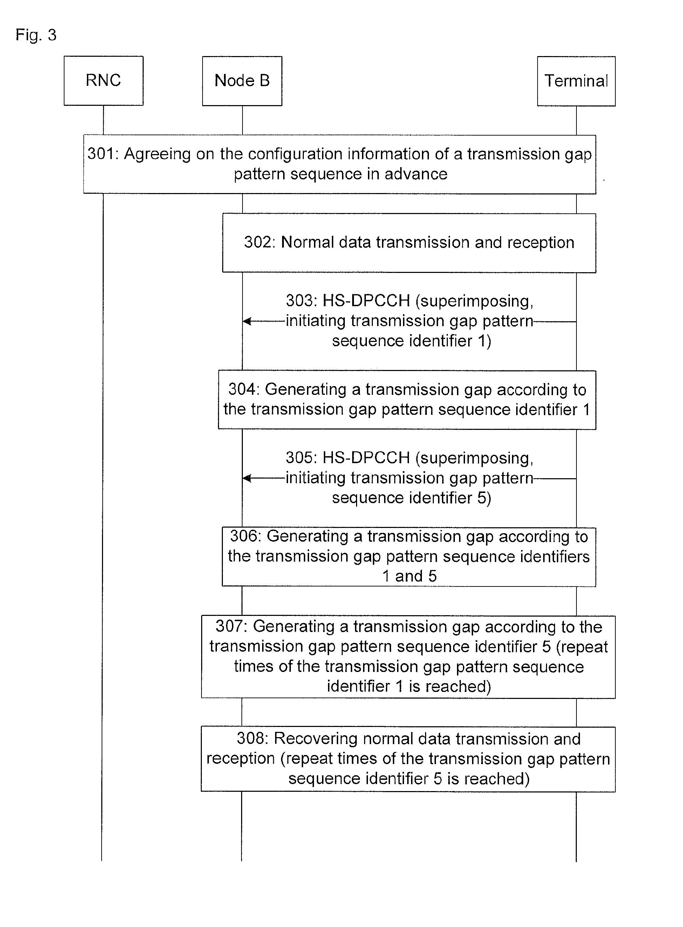

The process of the Embodiment 1 of the disclosure, as shown in Fig. 3, mainly includes the following steps:
Step 301: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 302: Normal data transmission and reception are performed between the terminal and the Node B.

Step 303: The terminal sends the Node B through an HS-DPCCH the information of "initiating a new transmission gap pattern sequence (the transmission gap pattern sequence identification 1) by way of superimposing on the currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 1, for indicating the transmission gap pattern sequence identifier 1; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 1, for indicating Superimposing way.

Step 304: The terminal and the Node B generate a transmission gap according to the description of the transmission gap pattern sequence identified by the transmission gap pattern sequence identifier 1.

Step 305: Before the repeat times (20 times) of the transmission gap pattern sequence identified by the transmission gap pattern sequence identifier 1 is reached, the terminal sends the Node B through the HS-DPCCH the information of "initiating a new transmission gap pattern sequence (the transmission gap pattern sequence identifier 5) by way of superimposing on currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 5, for indicating the transmission gap pattern sequence identifier 5; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 1, for indicating Superimposing way.

Step 306: The terminal and the Node B generate a transmission gap in the Superimposing manner, according to the descriptions of the transmission gap pattern sequence identified by the transmission gap pattern sequence identifier 1 and the transmission gap pattern sequence identified by the transmission gap pattern sequence identifier 5.

Step 307: The repeat times (20 times) of the transmission gap pattern sequence identified by the transmission gap pattern sequence identifier 1 is reached. The terminal and the Node B stop the transmission gap pattern sequence identified by the transmission gap pattern sequence identifier 1 and continue generating a transmission gap according to the description of the transmission gap pattern sequence identified by the transmission gap pattern sequence identifier 5.

Step 308: The repeat times (50 times) of the transmission gap pattern sequence identified by the transmission gap pattern sequence identifier 5 is reached. The terminal and the Node B stop the transmission gap pattern sequence identified by the transmission gap pattern sequence identifier 5, and recover the data transmission and reception therebetween.

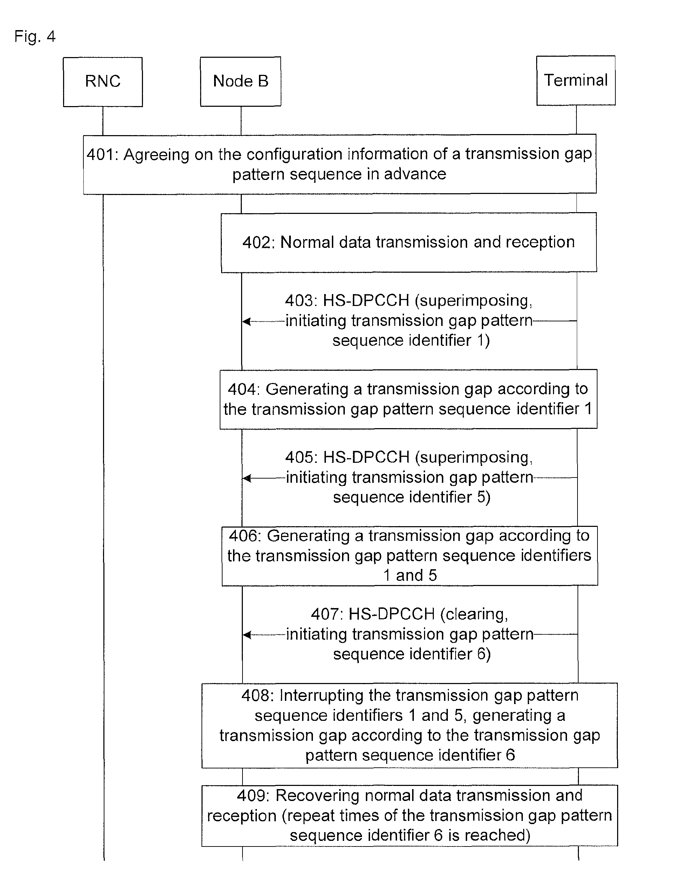

The process of the Embodiment 2 of the disclosure, as shown in Fig. 4, mainly includes the following steps:
Step 401: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6, the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 402: Data transmission and reception are performed between the terminal and the Node B.

Step 403: The terminal sends the Node B through an HS-DPCCH the information of "initiating a new transmission gap pattern sequence by way of superimposing on the currently initiated transmission gap pattern sequences (the transmission gap pattern sequence identifier 1)".

In the "Confirmation" domain of the HS-DPCCH, the first bit takes the value of 1 and the second bit takes the value of 0; the third, fourth and fifth bits of the "Confirmation" domain of the HS-DPCCH take the value of 1, for indicating the transmission gap pattern sequence identifier 1; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 1, for indicating Superimposing way.

Step 404: The terminal and the Node B generate a transmission gap according to the description of the transmission gap pattern sequence identified by the transmission gap pattern sequence identifier 1.

Step 405: Before the repeat times (20 times) of the transmission gap pattern sequence identified by the transmission gap pattern sequence identifier 1 is reached, the terminal sends the Node B through the HS-DPCCH the information on "initiating a new transmission gap pattern sequence (the transmission gap pattern sequence identifier 5) by way of superimposing on currently initiated transmission gap pattern sequences".

In the "Confirmation" domain of the HS-DPCCH, the first bit takes the value of 1 and the second bit takes the value of 0; the third, fourth and fifth bits of the "Confirmation" domain of the HS-DPCCH take the value of 5, for indicating the transmission gap pattern sequence identifier 5; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 1, for indicating Superimposing way.

Step 406: The terminal and the Node B generate a transmission gap in the Superimposing manner, according to the descriptions of the transmission gap pattern sequence identified by the transmission gap pattern sequence identifier 1 and the transmission gap pattern sequence identified by the transmission gap pattern sequence identifier 5.

Step 407: Before the repeat times (20 times) of the transmission gap pattern sequence identified by the transmission gap pattern sequence identifier 1 is reached, and before the repeat times (50 times) of the transmission gap pattern sequence identified by the transmission gap pattern sequence identifier 5 is reached, the terminal sends the Node B through the HS-DPCCH the information on "initiating a new transmission gap pattern sequence (the transmission gap pattern sequence identifier 6) by way of clearing all currently initiated transmission gap pattern sequences".

In the "Confirmation" domain of the HS-DPCCH, the first bit takes the value of 1 and the second bit takes the value of 0; the third, fourth and fifth bits of the "Confirmation" domain of the HS-DPCCH take the value of 6, for indicating the transmission gap pattern sequence identifier 6; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 0, for indicating Clear way.

Step 408: The terminal and the Node B interrupt the transmission gap pattern sequence identified by the transmission gap pattern sequence identifier 1 and interrupt the transmission gap pattern sequence identified by the transmission gap pattern sequence identifier 5. The terminal and the Node B generate a transmission gap according to the description of the transmission gap pattern sequence identified by the transmission gap pattern sequence identifier 6.

Step 409: The repeat times (32) of the transmission gap pattern sequence identified by the transmission gap pattern sequence identifier 6 is reached. The terminal and the Node B stop the transmission gap pattern sequence identified by the transmission gap pattern sequence identifier 6, and recover the normal data transmission and reception therebetween.

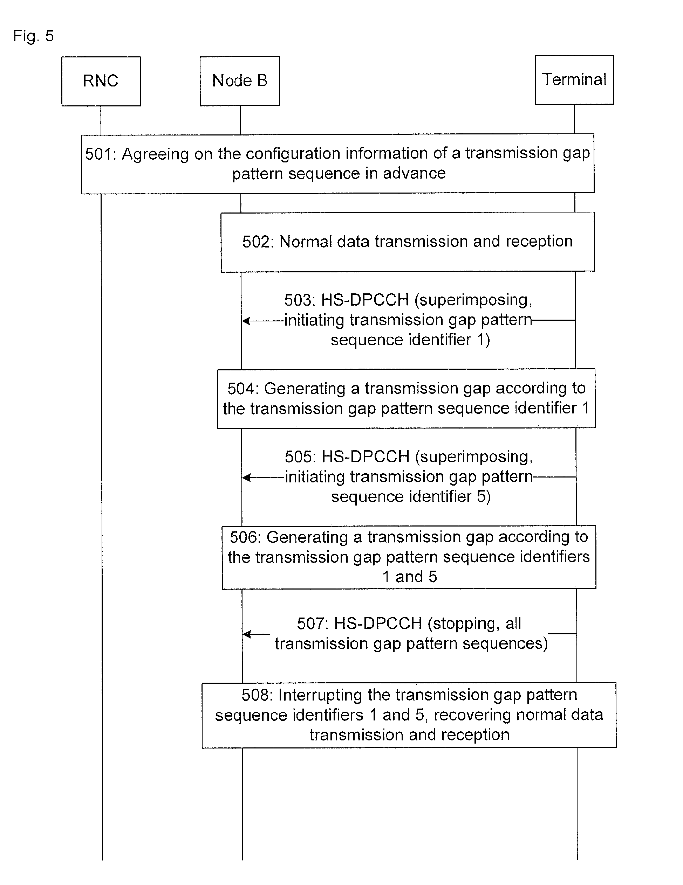

The process of the Embodiment 3 of the disclosure, as shown in Fig. 5, mainly includes the following steps:
Step 501: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in a transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 502: Normal data transmission and reception are performed between the terminal and the Node B.

Step 503: The terminal sends the Node B through an HS-DPCCH the information of "initiating a new transmission gap pattern sequence (the transmission gap pattern sequence identifier 1) by way of superimposing on the currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 1, for indicating the transmission gap pattern sequence identifier 1; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 1, for indicating Superimposing way.

Step 504: The terminal and the Node B generate a transmission gap according to the description of the transmission gap pattern sequence identified by the transmission gap pattern sequence identifier 1.

Step 505: Before the repeat times (20 times) of the transmission gap pattern sequence identified by the transmission gap pattern sequence identifier 1 is reached, the terminal sends the Node B through the HS-DPCCH the information of "initiating a new transmission gap pattern sequence (the transmission gap pattern sequence identifier 5) by way of superimposing on the currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 5, for indicating the transmission gap pattern sequence identifier 5; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 1, for indicating Superimposing way.

Step 506: The terminal and the Node B generate a transmission gap in the Superimposing manner, according to the descriptions of the transmission gap pattern sequence identified by the transmission gap pattern sequence identifier 1 and the transmission gap pattern sequence identified by the transmission gap pattern sequence identifier 5.

Step 507: Before the repeat times (20 times) of the transmission gap pattern sequence identified by the transmission gap pattern sequence identifier 1 is reached, and before the repeat times (50 times) of the transmission gap pattern sequence identified by the transmission gap pattern sequence identifier 5 is reached, the terminal sends the Node B through the HS-DPCCH the information of "stopping a transmission gap pattern sequence by way of stopping all currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 0, for indicating all currently initiated transmission gap pattern sequences; the sixth bit of the "Confirmation" domain of the HS-DPCCH takes the value of 0, for indicating the operation of stopping a transmission gap pattern sequence.

Step 508: The terminal and the Node B interrupt the transmission gap pattern sequence identified by the transmission gap pattern sequence identifier 1 and interrupt the transmission gap pattern sequence identified by the transmission gap pattern sequence identifier 5. The terminal and the Node B recover the normal data transmission and reception therebetween.

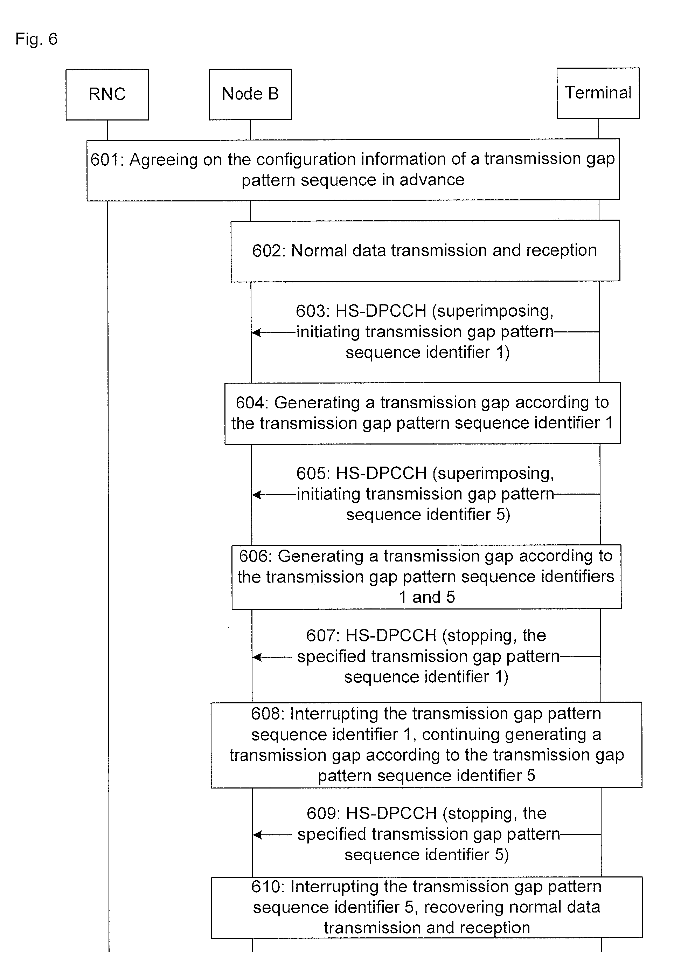

The process of the Embodiment 4 of the disclosure, as shown in Fig. 6, mainly includes the following steps:
Step 601: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 602: Normal data transmission and reception are performed between the terminal and the Node B.

Step 603: The terminal sends the Node B through an HS-DPCCH the information of "initiating a new transmission gap pattern sequence (the transmission gap pattern sequence identifier 1) by way of superimposing on the currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 1, for indicating the transmission gap pattern sequence identifier 1; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 1, for indicating Superimposing way.

Step 604: The terminal and the Node B generate a transmission gap according to the description of the transmission gap pattern sequence identified by the transmission gap pattern sequence identifier 1.

Step 605: Before the repeat times (20 times) of the transmission gap pattern sequence identified by the transmission gap pattern sequence identifier 1 is reached, the terminal sends the Node B through the HS-DPCCH the information of "initiating a new transmission gap pattern sequence (the transmission gap pattern sequence identifier 5) by way of superimposing on the currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 5, for indicating the transmission gap pattern sequence identifier 5; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 1, for indicating Superimposing way.

Step 606: The terminal and the Node B generate a transmission gap in the Superimposing manner, according to the descriptions of the transmission gap pattern sequence identified by the transmission gap pattern sequence identifier 1 and the transmission gap pattern sequence identified by the transmission gap pattern sequence identifier 5.

Step 607: Before the repeat times (20 times) of the transmission gap pattern sequence identified by the transmission gap pattern sequence identifier 1 is reached, and before the repeat times (50 times) of the transmission gap pattern sequence identified by the transmission gap pattern sequence identifier 5 is reached, the terminal sends the Node B through the HS-DPCCH the information of "stopping a transmission gap pattern sequence by way of stopping the specified transmission gap pattern sequence (the transmission gap pattern sequence identifier 1)".

In the "Confirmation" domain of the HS-DPCCH, the first bit takes the value of 1 and the second bit takes the value of 0; the third, fourth and fifth bits of the "Confirmation" domain of the HS-DPCCH take the value of 1, for indicating the transmission gap pattern sequence identifier 1 of the specified transmission gap pattern sequence; the sixth bit of the "Confirmation" domain of the HS-DPCCH takes the value of 0, for indicating the operation of stopping a transmission gap pattern sequence.

Step 608: The terminal and the Node B interrupt the transmission gap pattern sequence identified by the transmission gap pattern sequence identifier 1. The terminal and the Node B continue generating a transmission gap in the Superimposing manner, according to the description of the transmission gap pattern sequence identified by the transmission gap pattern sequence identifier 5.

Step 609: Before the repeat times (50 times) of the transmission gap pattern sequence identified by the transmission gap pattern sequence identifier 5 is reached, the terminal sends the Node B through the HS-DPCCH the information of "stopping a transmission gap pattern sequence by way of stopping the specified transmission gap pattern sequence (the transmission gap pattern sequence identifier 5)".

In the "Confirmation" domain of the HS-DPCCH, the first bit takes the value of 1 and the second bit takes the value of 0; the third, fourth and fifth bits of the "Confirmation" domain of the HS-DPCCH take the value of 5, for indicating the transmission gap pattern sequence identifier 5 of the specified transmission gap pattern sequence; the sixth bit of the "Confirmation" domain of the HS-DPCCH takes the value of 0, for indicating the operation of stopping a transmission gap pattern sequence.

Step 610: The terminal and the Node B interrupt the transmission gap pattern sequence identified by the transmission gap pattern sequence identifier 5. The terminal and the Node B recover the normal data transmission and reception therebetween.

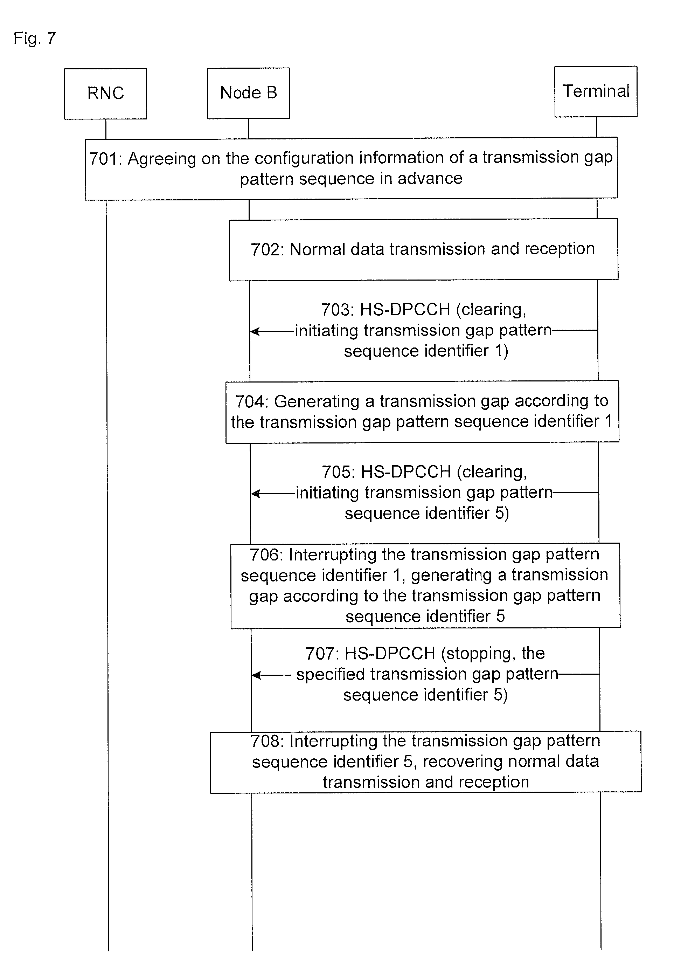

The process of the Embodiment 5 of the disclosure, as shown in Fig. 7, mainly includes the following steps:
Step 701: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 702: Normal data transmission and reception are performed between the terminal and the Node B.

Step 703: The terminal sends the Node B through an HS-DPCCH the information of "initiating a new transmission gap pattern sequence (the transmission gap pattern sequence identifier 1) by way of clearing all currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 1, for indicating the transmission gap pattern sequence identifier 1; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 0, for indicating Clear way.

Step 704: The terminal and the Node B generate a transmission gap according to the description of the transmission gap pattern sequence identified by the transmission gap pattern sequence identifier 1.

Step 705: Before the repeat times (20 times) of the transmission gap pattern sequence identified by the transmission gap pattern sequence identifier 1 is reached, the terminal sends the Node B through the HS-DPCCH the information of "initiating a new transmission gap pattern sequence (the transmission gap pattern sequence identifier 5) by way of clearing all currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 5, for indicating the transmission gap pattern sequence identifier 5; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 0, for indicating Clear way.

Step 706: The terminal and the Node B interrupt the transmission gap pattern sequence identified by the transmission gap pattern sequence identifier 1. The terminal and the Node B generate a transmission gap according to the description of the transmission gap pattern sequence identified by the transmission gap pattern sequence identifier 5.

Step 707: Before the repeat times (50 times) of the transmission gap pattern sequence identified by the transmission gap pattern sequence identifier 5 is reached, the terminal sends the Node B through the HS-DPCCH the information of "stopping a transmission gap pattern sequence by way of stopping the specified transmission gap pattern sequence (the transmission gap pattern sequence identifier 5)".

In the "Confirmation" domain of the HS-DPCCH, the first bit takes the value of 1 and the second bit takes the value of 0; the third, fourth and fifth bits of the "Confirmation" domain of the HS-DPCCH take the value of 1, for indicating the transmission gap pattern sequence identifier 5 of the specified transmission gap pattern sequence; the sixth bit of the "Confirmation" domain of the HS-DPCCH takes the value of 0, for indicating the operation of stopping a transmission gap pattern sequence.

Step 708: The terminal and the Node B interrupt the transmission gap pattern sequence identified by the transmission gap pattern sequence identifier 5. The terminal and the Node B recover the normal data transmission and reception therebetween.

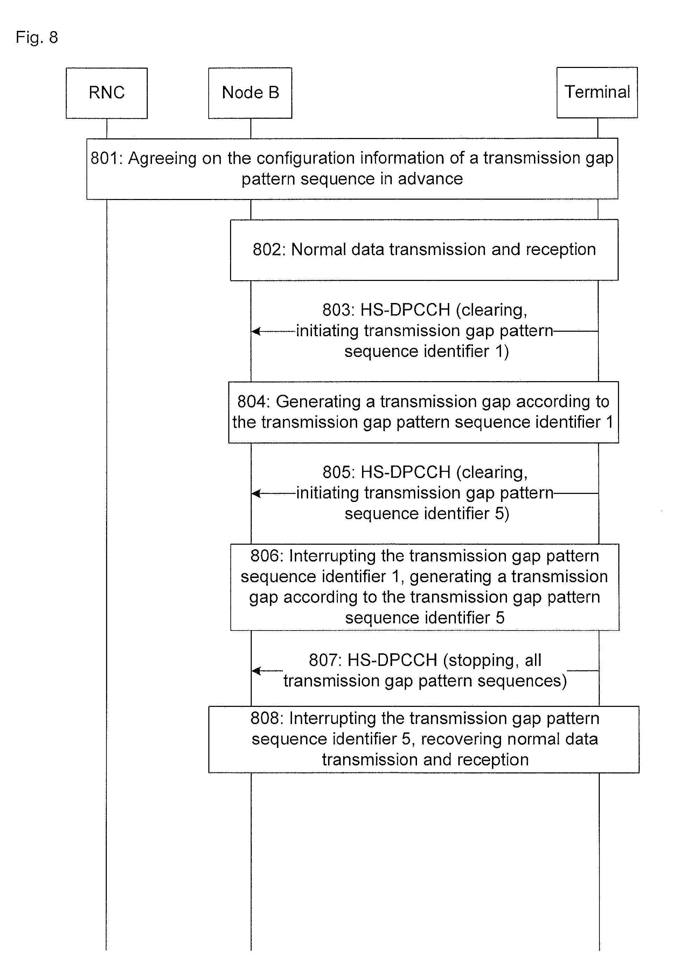

The process of the Embodiment 6 of the disclosure, as shown in Fig. 8, mainly includes the following steps:
Step 801: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 802: Normal data transmission and reception are performed between the terminal and the Node B.

Step 803: The terminal sends the Node B through an HS-DPCCH the information of "initiating a new transmission gap pattern sequence (the transmission gap pattern sequence identifier 1) by way of clearing all currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 1, for indicating the transmission gap pattern sequence identifier 1; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 0, for indicating Clear way.

Step 804: The terminal and the Node B generate a transmission gap according to the description of the transmission gap pattern sequence identified by the transmission gap pattern sequence identifier 1.

Step 805: Before the repeat times (20 times) of the transmission gap pattern sequence identified by the transmission gap pattern sequence identifier 1 is reached, the terminal sends the Node B through the HS-DPCCH the information of "initiating a new transmission gap pattern sequence (the transmission gap pattern sequence identifier 5) by way of clearing all currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 5, for indicating the transmission gap pattern sequence identifier 5; the sixth bit of the "Confirmation" domain of the HS-DPCCH takes the value of 1, for indicating the operation of initiating a new transmission gap pattern sequence; and the seventh bit of the "Confirmation" domain of the HS-DPCCH takes the value of 0, for indicating Clear way.

Step 806: The terminal and the Node B interrupt the transmission gap pattern sequence identified by the transmission gap pattern sequence identifier 1. The terminal and the Node B generate a transmission gap, according to the description of the transmission gap pattern sequence identified by the transmission gap pattern sequence identifier 5.

Step 807: Before the repeat times (50 times) of the transmission gap pattern sequence identified by the transmission gap pattern sequence identifier 5 is reached, the terminal sends the Node B through the HS-DPCCH the information of "stopping a transmission gap pattern sequence by way of stopping all currently initiated transmission gap pattern sequences."

In the "Confirmation" domain of the HS-DPCCH, the first bit takes the value of 1 and the second bit takes the value of 0; the third, fourth and fifth bits of the "Confirmation" domain of the HS-DPCCH take the value of 0, for indicating all currently initiated transmission gap pattern sequences; the sixth bit of the "Confirmation" domain of the HS-DPCCH takes the value of 0, for indicating the operation of stopping a transmission gap pattern sequence.

Step 808: The terminal and the Node B interrupt the transmission gap pattern sequence identified by the transmission gap pattern sequence identifier 5. The terminal and the Node B recover the normal data transmission and reception therebetween.

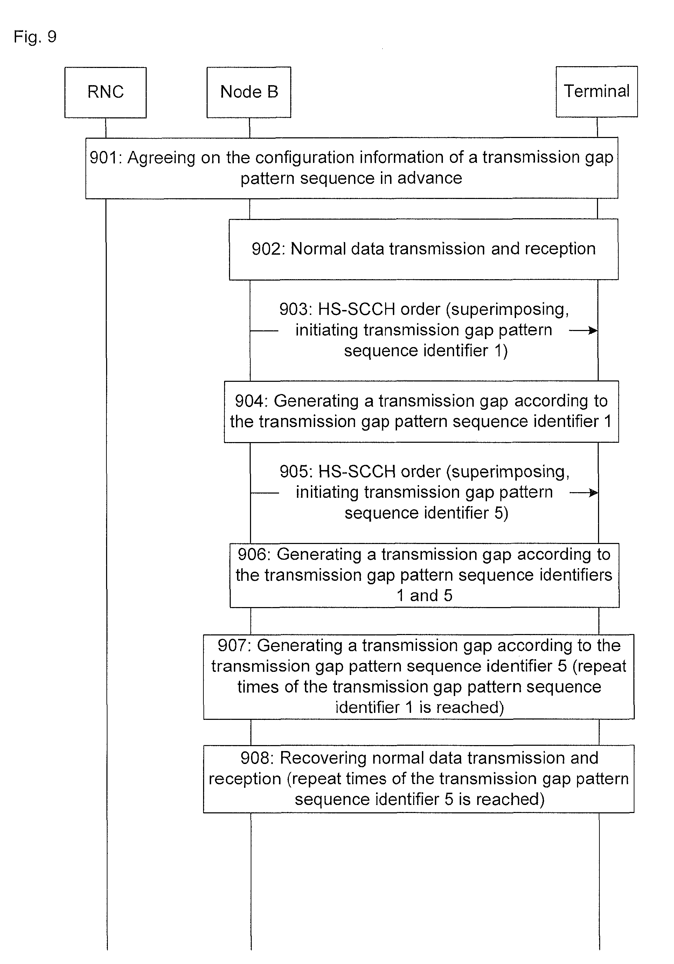

The process of the Embodiment 7 of the disclosure, as shown in Fig. 9, mainly includes the following steps:
Step 901: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 902: Normal data transmission and reception are performed between the terminal and the Node B.

Step 903: The Node B sends the terminal through an HS-SCCH order the information of "initiating a new transmission gap pattern sequence (the transmission gap pattern sequence identifier 1) by way of superimposing on the currently initiated transmission gap pattern sequences."

The first bit of the 6 bits in the HS-SCCH order takes the value of 1; the second, third and fourth bits of the 6 bits in the HS-SCCH order take the value of 1, for indicating the transmission gap pattern sequence identifier 1; the fifth bit of the 6 bits in the HS-SCCH order takes the value of 1, for indicating the operation of initiating a new transmission gap pattern sequence; and the sixth bit of the 6 bits in the HS-SCCH order takes the value of 1, for indicating Superimposing way.

Step 904: The terminal and the Node B generate a transmission gap according to the description of the transmission gap pattern sequence identified by the transmission gap pattern sequence identifier 1.

Step 905: Before the repeat times (20 times) of the transmission gap pattern sequence identified by the transmission gap pattern sequence identifier 1 is reached, the Node B sends the terminal through the HS-SCCH order the information of "initiating a new transmission gap pattern sequence (the transmission gap pattern sequence identifier 5) by way of superimposing on the currently initiated transmission gap pattern sequences".

The first bit of the 6 bits in the HS-SCCH order takes the value of 1; the second, third and fourth bits of the 6 bits in the HS-SCCH order take the value of 5, for indicating the transmission gap pattern sequence identifier 5; the fifth bit of the 6 bits in the HS-SCCH order takes the value of 1, for indicating the operation of initiating a new transmission gap pattern sequence; and the sixth bit of the 6 bits in the HS-SCCH order takes the value of 1, for indicating Superimposing way.

Step 906: The terminal and the Node B generate a transmission gap in the Superimposing manner, according to the descriptions of the transmission gap pattern sequence identified by the transmission gap pattern sequence identifier 1 and the transmission gap pattern sequence identified by the transmission gap pattern sequence identifier 5.

Step 907: The repeat times (20 times) of the transmission gap pattern sequence identified by the transmission gap pattern sequence identifier 1 is reached. The terminal and the Node B stop the transmission gap pattern sequence identified by the transmission gap pattern sequence identifier 1 and continue generating a transmission gap according to the description of the transmission gap pattern sequence identified by the transmission gap pattern sequence identifier 5.

Step 908: The repeat times (50 times) of the transmission gap pattern sequence identified by the transmission gap pattern sequence identifier 5 is reached. The terminal and the Node B stop the transmission gap pattern sequence identified by the transmission gap pattern sequence identifier 5, and recover the normal data transmission and reception therebetween.

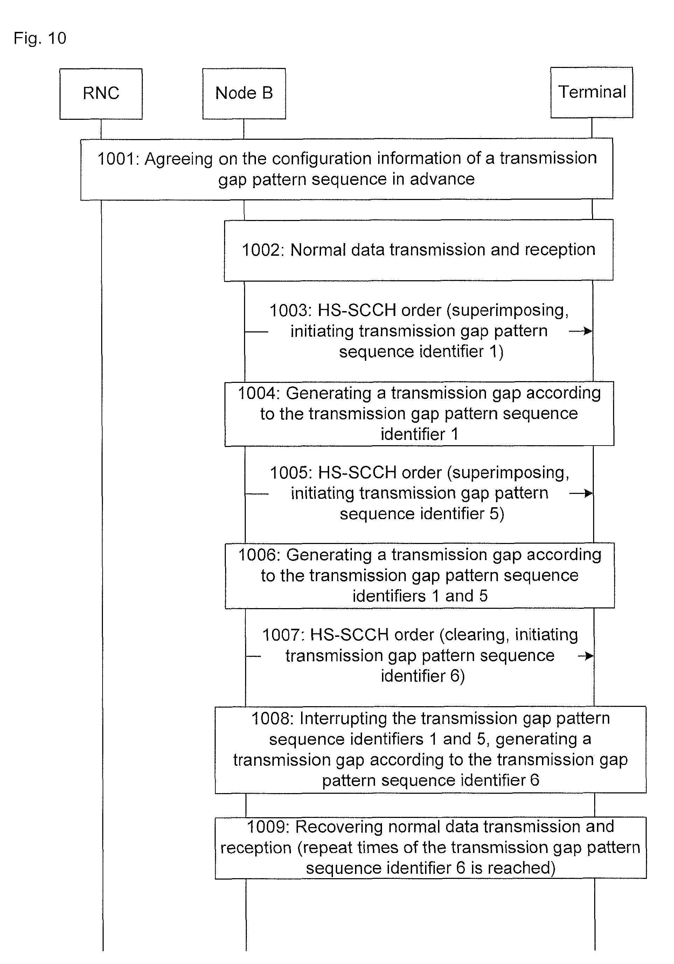

The process of the Embodiment 8 of the disclosure, as shown in Fig. 10, mainly includes the following steps:
Step 1001: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 1002: Normal data transmission and reception are performed between the terminal and the Node B.

Step 1003: The Node B sends the terminal through an HS-SCCH order the information of "initiating a new transmission gap pattern sequence (the transmission gap pattern sequence identifier 1) by way of superimposing on the currently initiated transmission gap pattern sequences."

The first bit of the 6 bits in the HS-SCCH order takes the value of 1; the second, third and fourth bits of the 6 bits in the HS-SCCH order take the value of 1, for indicating the transmission gap pattern sequence identifier 1; the fifth bit of the 6 bits in the HS-SCCH order takes the value of 1, for indicating the operation of initiating a new transmission gap pattern sequence; and the sixth bit of the 6 bits in the HS-SCCH order takes the value of 1, for indicating Superimposing way.

Step 1004: The terminal and the Node B generate a transmission gap according to the description of the transmission gap pattern sequence identified by the transmission gap pattern sequence identifier 1.

Step 1005: Before the repeat times (20 times) of the transmission gap pattern sequence identified by the transmission gap pattern sequence identifier 1 is reached, the Node B sends the terminal through the HS-SCCH order the information of "initiating a new transmission gap pattern sequence (the transmission gap pattern sequence identifier 5) by way of superimposing on the currently initiated transmission gap pattern sequences."

The first bit of the 6 bits in the HS-SCCH order takes the value of 1; the second, third and fourth bits of the 6 bits in the HS-SCCH order take the value of 5, for indicating the transmission gap pattern sequence identifier 5; the fifth bit of the 6 bits in the HS-SCCH order takes the value of 1, for indicating the operation of initiating a new transmission gap pattern sequence; and the sixth bit of the 6 bits in the HS-SCCH order takes the value of 1, for indicating Superimposing way.

Step 1006: The terminal and the Node B generate a transmission gap in the Superimposing manner, according to the descriptions of the transmission gap pattern sequence identified by the transmission gap pattern sequence identifier 1 and the transmission gap pattern sequence identified by the transmission gap pattern sequence identifier 5.

Step 1007: Before the repeat times (20 times) of the transmission gap pattern sequence identified by the transmission gap pattern sequence identifier 1 is reached, and before the repeat times (50 times) of the transmission gap pattern sequence identified by the transmission gap pattern sequence identifier 5 is reached, the Node B sends the terminal through the HS-SCCH order the information of "initiating a new transmission gap pattern sequence (the transmission gap pattern sequence identifier 6) by way of clearing all currently initiated transmission gap pattern sequences."

The first bit of the 6 bits in the HS-SCCH order takes the value of 1; the second, third and fourth bits of the 6 bits in the HS-SCCH order take the value of 6, for indicating the transmission gap pattern sequence identifier 6; the fifth bit of the 6 bits in the HS-SCCH order takes the value of 1, for indicating the operation of initiating a new transmission gap pattern sequence; and the sixth bit of the 6 bits in the HS-SCCH order takes the value of 0, for indicating Clear way.

Step 1008: The terminal and the Node B interrupt the transmission gap pattern sequence identified by the transmission gap pattern sequence identifier 1 and interrupt the transmission gap pattern sequence identified by the transmission gap pattern sequence identifier 5. The terminal and the Node B generate a transmission gap according to the description of the transmission gap pattern sequence identified by the transmission gap pattern sequence identifier 6.

Step 1009: The repeat times (32) of the transmission gap pattern sequence identified by the transmission gap pattern sequence identifier 6 is reached. The terminal and the Node B stop the transmission gap pattern sequence identified by the transmission gap pattern sequence identifier 6, and recover the normal data transmission and reception therebetween.

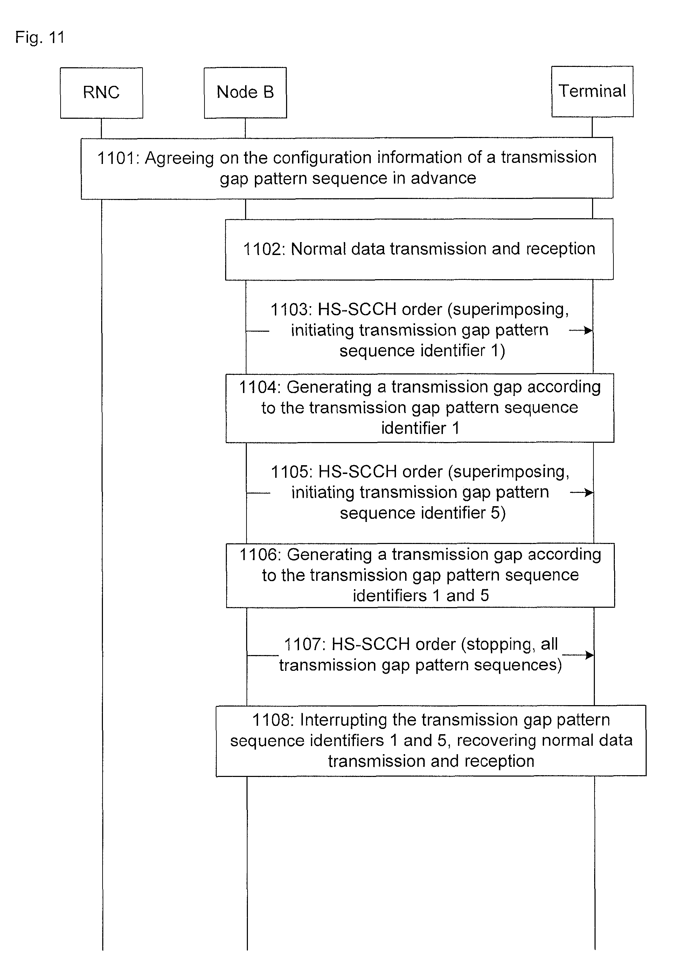

The process of the Embodiment 9 of the disclosure, as shown in Fig. 11, mainly includes the following steps:
Step 1101: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in a transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 1102: Normal data transmission and reception are performed between the terminal and the Node B.

Step 1103: The Node B sends the terminal through an HS-SCCH order the information of "initiating a new transmission gap pattern sequence (the transmission gap pattern sequence identifier 1) by way of superimposing on the currently initiated transmission gap pattern sequences."

The first bit of the 6 bits in the HS-SCCH order takes the value of 1; the second, third and fourth bits of the 6 bits in the HS-SCCH order take the value of 1, for indicating the transmission gap pattern sequence identifier 1; the fifth bit of the 6 bits in the HS-SCCH order takes the value of 1, for indicating the operation of initiating a new transmission gap pattern sequence; and the sixth bit of the 6 bits in the HS-SCCH order takes the value of 1, for indicating Superimposing way.

Step 1104: The terminal and the Node B generate a transmission gap according to the description of the transmission gap pattern sequence identified by the transmission gap pattern sequence identifier 1.

Step 1105: Before the repeat times (20 times) of the transmission gap pattern sequence identified by the transmission gap pattern sequence identifier 1 is reached, the Node B sends the terminal through the HS-SCCH order the information of "initiating a new transmission gap pattern sequence (the transmission gap pattern sequence identifier 5) by way of superimposing on the currently initiated transmission gap pattern sequences."

The first bit of the 6 bits in the HS-SCCH order takes the value of 1; the second, third and fourth bits of the 6 bits in the HS-SCCH order take the value of 5, for indicating the transmission gap pattern sequence identifier 5; the fifth bit of the 6 bits in the HS-SCCH order takes the value of 1, for indicating the operation of initiating a new transmission gap pattern sequence; and the sixth bit of the 6 bits in the HS-SCCH order takes the value of 1, for indicating Superimposing way.

Step 1106: The terminal and the Node B generate a transmission gap in the Superimposing manner, according to the descriptions of the transmission gap pattern sequence identified by the transmission gap pattern sequence identifier 1 and the transmission gap pattern sequence identified by the transmission gap pattern sequence identifier 5.

Step 1107: Before the repeat times (20 times) of the transmission gap pattern sequence identified by the transmission gap pattern sequence identifier 1 is reached, and before the repeat times (50 times) of the transmission gap pattern sequence identified by the transmission gap pattern sequence identifier 5 is reached, the Node B sends the terminal through the HS-SCCH order the information of "stopping a transmission gap pattern sequence by way of stopping all currently initiated transmission gap pattern sequences."

The first bit of the 6 bits in the HS-SCCH order takes the value of 1; the second, third and fourth bits of the 6 bits in the HS-SCCH order take the value of 0, for indicating all currently initiated transmission gap pattern sequences; the fifth bit of the 6 bits in the HS-SCCH order takes the value of 0, for indicating the operation of stopping a transmission gap pattern sequence.

Step 1108: The terminal and the Node B interrupt the transmission gap pattern sequence identified by the transmission gap pattern sequence identifier 1 and interrupt the transmission gap pattern sequence identified by the transmission gap pattern sequence identifier 5. The terminal and the Node B recover the normal data transmission and reception therebetween.

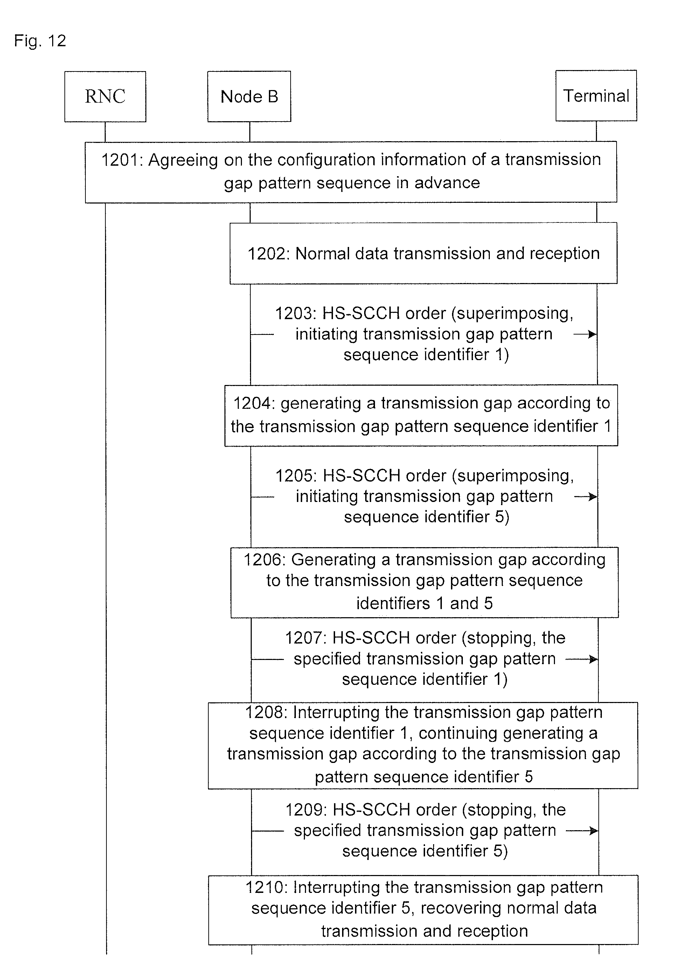

The process of the Embodiment 10 of the disclosure, as shown in Fig. 12, mainly includes the following steps:
Step 1201: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 1202: Normal data transmission and reception are performed between the terminal and the Node B.

Step 1203: The Node B sends the terminal through an HS-SCCH order the information of "initiating a new transmission gap pattern sequence (the transmission gap pattern sequence identifier 1) by way of superimposing on the currently initiated transmission gap pattern sequences."

The first bit of the 6 bits in the HS-SCCH order takes the value of 1; the second, third and fourth bits of the 6 bits in the HS-SCCH order take the value of 1, for indicating the transmission gap pattern sequence identifier 1; the fifth bit of the 6 bits in the HS-SCCH order takes the value of 1, for indicating the operation of initiating a new transmission gap pattern sequence; and the sixth bit of the 6 bits in the HS-SCCH order takes the value of 1, for indicating Superimposing way.

Step 1204: The terminal and the Node B generate a transmission gap according to the description of the transmission gap pattern sequence identified by the transmission gap pattern sequence identifier 1.

Step 1205: Before the repeat times (20 times) of the transmission gap pattern sequence identified by the transmission gap pattern sequence identifier 1 is reached, the Node B sends the terminal through the HS-SCCH order the information of "initiating a new transmission gap pattern sequence (the transmission gap pattern sequence identifier 5) by way of superimposing on the currently initiated transmission gap pattern sequences."

The first bit of the 6 bits in the HS-SCCH order takes the value of 1; the second, third and fourth bits of the 6 bits in the HS-SCCH order take the value of 5, for indicating the transmission gap pattern sequence identifier 5; the fifth bit of the 6 bits in the HS-SCCH order takes the value of 1, for indicating the operation of initiating a new transmission gap pattern sequence; and the sixth bit of the 6 bits in the HS-SCCH order takes the value of 1, for indicating Superimposing way.

Step 1206: The terminal and the Node B generate a transmission gap in the Superimposing manner, according to the descriptions of the transmission gap pattern sequence identified by the transmission gap pattern sequence identifier 1 and the transmission gap pattern sequence identified by the transmission gap pattern sequence identifier 5.

Step 1207: Before the repeat times (20 times) of the transmission gap pattern sequence identified by the transmission gap pattern sequence identifier 1 is reached, and before the repeat times (50 times) of the transmission gap pattern sequence identified by the transmission gap pattern sequence identifier 5 is reached, the Node B sends the terminal through the HS-SCCH order the information of "stopping a transmission gap pattern sequence by way of stopping the specified transmission gap pattern sequence (the transmission gap pattern sequence identifier 1)".

The first bit of the 6 bits in the HS-SCCH order takes the value of 1; the second, third and fourth bits of the 6 bits in the HS-SCCH order take the value of 1, for indicating the transmission gap pattern sequence identifier 1 of the specified transmission gap pattern sequence; the fifth bit of the 6 bits in the HS-SCCH order takes the value of 0, for indicating the operation of stopping a transmission gap pattern sequence.

Step 1208: The terminal and the Node B interrupt the transmission gap pattern sequence identified by the transmission gap pattern sequence identifier 1. The terminal and the Node B continue generating a transmission gap in the Superimposing manner, according to the description of the transmission gap pattern sequence identified by the transmission gap pattern sequence identifier 5.

Step 1209: Before the repeat times (50 times) of the transmission gap pattern sequence identified by the transmission gap pattern sequence identifier 5 is reached, the Node B sends the terminal through the HS-SCCH order the information of "stopping a transmission gap pattern sequence by way of stopping the specified transmission gap pattern sequence (the transmission gap pattern sequence identifier 5) ."

The first bit of the 6 bits in the HS-SCCH order takes the value of 1; the second, third and fourth bits of the 6 bits in the HS-SCCH order take the value of 5, for indicating the transmission gap pattern sequence identifier 5 of the specified transmission gap pattern sequence; the fifth bit of the 6 bits in the HS-SCCH order takes the value of 0, for indicating the operation of stopping a transmission gap pattern sequence.

Step 1210: The terminal and the Node B interrupt the transmission gap pattern sequence identified by the transmission gap pattern sequence identifier 5. The terminal and the Node B recover the normal data transmission and reception therebetween.

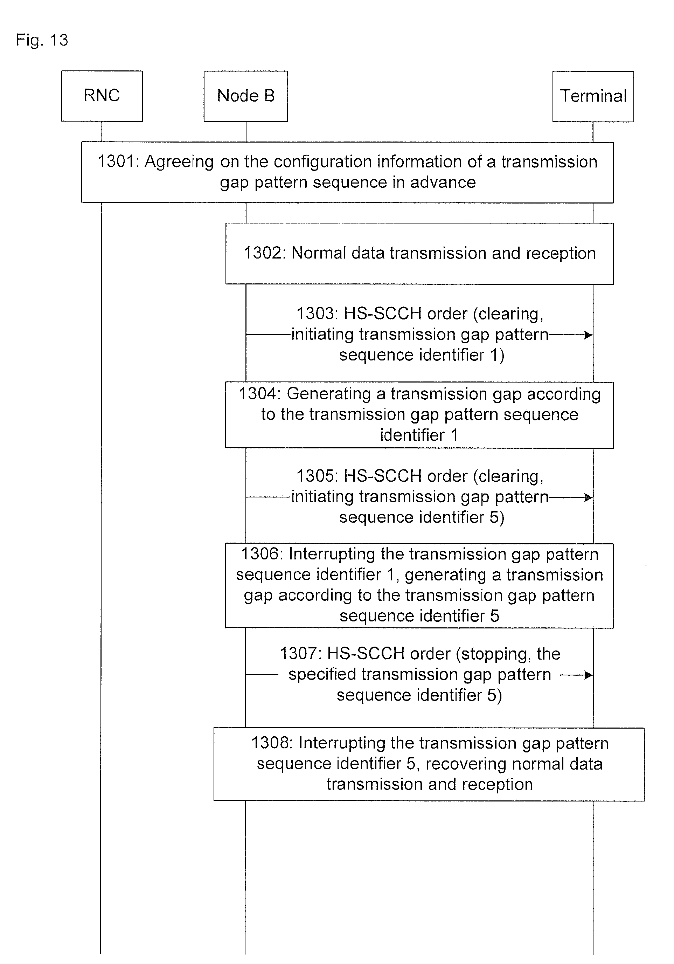

The process of the Embodiment 11 of the disclosure, as shown in Fig. 13, mainly includes the following steps:
Step 1301: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 1302: Normal data transmission and reception are performed between the terminal and the Node B.

Step 1303: The Node B sends the terminal through an HS-SCCH order the information of "initiating a new transmission gap pattern sequence (the transmission gap pattern sequence identifier 1) by way of clearing all currently initiated transmission gap pattern sequences."

The first bit of the 6 bits in the HS-SCCH order takes the value of 1; the second, third and fourth bits of the 6 bits in the HS-SCCH order take the value of 1, for indicating the transmission gap pattern sequence identifier 1; the fifth bit of the 6 bits in the HS-SCCH order takes the value of 1, for indicating the operation of initiating a new transmission gap pattern sequence; and the sixth bit of the 6 bits in the HS-SCCH order takes the value of 0, for indicating Clear way.

Step 1304: The terminal and the Node B generate a transmission gap according to the description of the transmission gap pattern sequence identified by the transmission gap pattern sequence identifier 1.

Step 1305: Before the repeat times (20 times) of the transmission gap pattern sequence identified by the transmission gap pattern sequence identifier 1 is reached, the Node B sends the terminal through the HS-SCCH order the information of "initiating a new transmission gap pattern sequence (the transmission gap pattern sequence identifier 5) by way of clearing all currently initiated transmission gap pattern sequences."

The first bit of the 6 bits in the HS-SCCH order takes the value of 1; the second, third and fourth bits of the 6 bits in the HS-SCCH order take the value of 5, for indicating the transmission gap pattern sequence identifier 5; the fifth bit of the 6 bits in the HS-SCCH order takes the value of 1, for indicating the operation of initiating a new transmission gap pattern sequence; and the sixth bit of the 6 bits in the HS-SCCH order takes the value of 0, for indicating Clear way.

Step 1306: The terminal and the Node B interrupt the transmission gap pattern sequence identified by the transmission gap pattern sequence identifier 1. The terminal and the Node B generate a transmission gap according to the description of the transmission gap pattern sequence identified by the transmission gap pattern sequence identifier 5.

Step 1307: Before the repeat times (50 times) of the transmission gap pattern sequence identified by the transmission gap pattern sequence identifier 5 is reached, the Node B sends the terminal through the HS-SCCH order the information of "stopping a transmission gap pattern sequence by way of stopping the specified transmission gap pattern sequence (the transmission gap pattern sequence identifier 5)."

The first bit of the 6 bits in the HS-SCCH order takes the value of 1; the second, third and fourth bits of the 6 bits in the HS-SCCH order take the value of 5, for indicating the transmission gap pattern sequence identifier 5 of the specified transmission gap pattern sequence; the fifth bit of the 6 bits in the HS-SCCH order takes the value of 0, for indicating the operation of stopping a transmission gap pattern sequence.

Step 1308: The terminal and the Node B interrupt the transmission gap pattern sequence identified by the transmission gap pattern sequence identifier 5. The terminal and the Node B recover the normal data transmission and reception therebetween.

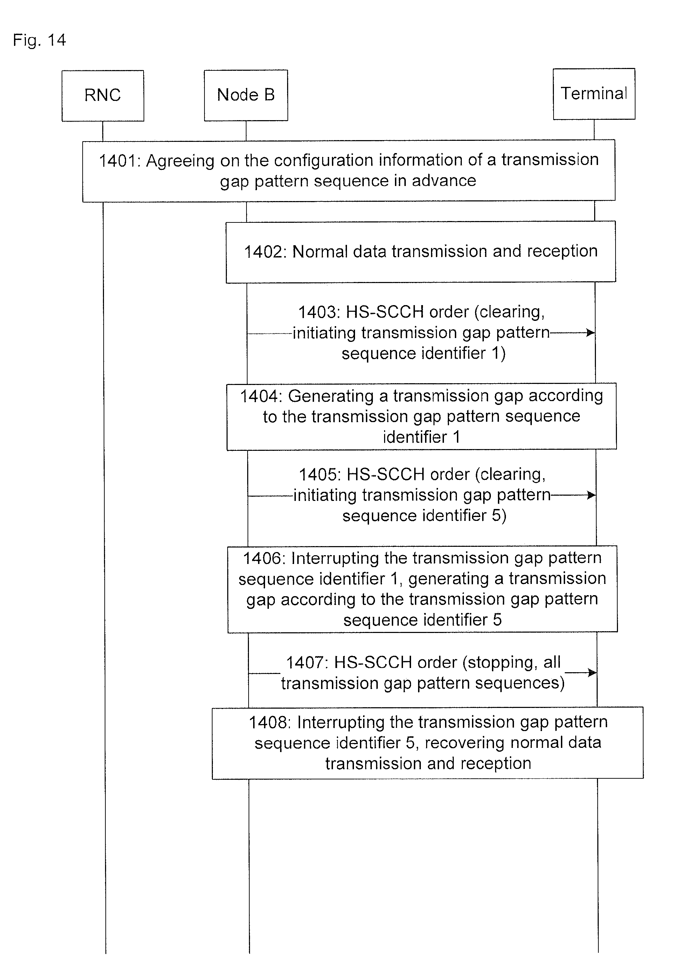

The process of the Embodiment 12 of the disclosure, as shown in Fig. 14, mainly includes the following steps:
Step 1401: A terminal and a Node B agree with an RNC in advance on the information of a transmission gap pattern sequence; or, the RNC configures the terminal with the information of the transmission gap pattern sequence through RRC protocol layer control signaling, and the RNC configures the Node B with the information of the transmission gap pattern sequence through NBAP protocol layer control signaling.

The information of the transmission gap pattern sequence includes:
a first set of transmission gap pattern sequence, which is used for FDD measurement and of which the transmission gap pattern sequence identifier is 1; the first set of transmission gap pattern sequence includes two alternate patterns, which are transmission gap pattern 1 and transmission gap pattern 2; each transmission gap pattern provides one transmission gap in one transmission gap pattern length; and the repeat times of the transmission gap pattern is 20;
a second set of transmission gap pattern sequence, which is used for GSM Initial Base Station Identity Code Identification and of which the transmission gap pattern sequence identifier is 5; the second set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 50; and
a third set of transmission gap pattern sequence, which is used for E-UTRA measurement and of which the transmission gap pattern sequence identifier is 6; the third set of transmission gap pattern sequence includes two alternate patterns, which are transmission gap pattern 1 and transmission gap pattern 2; each transmission gap pattern provides two transmission gaps in one transmission gap pattern length; and the repeat times of the transmission gap pattern is 32.

Step 1402: Normal data transmission and reception are performed between the terminal and the Node B.

Step 1403: The Node B sends the terminal through an HS-SCCH order the information of "initiating a new transmission gap pattern sequence (the transmission gap pattern sequence identifier 1) by way of clearing all currently initiated transmission gap pattern sequences".

The first bit of the 6 bits in the HS-SCCH order takes the value of 1; the second, third and fourth bits of the 6 bits in the HS-SCCH order take the value of 1, for indicating the transmission gap pattern sequence identifier 1; the fifth bit of the 6 bits in the HS-SCCH order takes the value of 1, for indicating the operation of initiating a new transmission gap pattern sequence; and the sixth bit of the 6 bits in the HS-SCCH order takes the value of 0, for indicating Clear way.

Step 1404: The terminal and the Node B generate a transmission gap according to the description of the transmission gap pattern sequence identified by the transmission gap pattern sequence identifier 1.

Step 1405: Before the repeat times (20 times) of the transmission gap pattern sequence identified by the transmission gap pattern sequence identifier 1 is reached, the Node B sends the terminal through the HS-SCCH order the information of "initiating a new transmission gap pattern sequence (the transmission gap pattern sequence identifier 5) by way of clearing all currently initiated transmission gap pattern sequences."

The first bit of the 6 bits in the HS-SCCH order takes the value of 1; the second, third and fourth bits of the 6 bits in the HS-SCCH order take the value of 5, for indicating the transmission gap pattern sequence identifier 5; the fifth bit of the 6 bits in the HS-SCCH order takes the value of 1, for indicating the operation of initiating a new transmission gap pattern sequence; and the sixth bit of the 6 bits in the HS-SCCH order takes the value of 0, for indicating Clear way.

Step 1406: The terminal and the Node B interrupt the transmission gap pattern sequence identified by the transmission gap pattern sequence identifier 1. The terminal and the Node B generate a transmission gap according to the description of the transmission gap pattern sequence identified by the transmission gap pattern sequence identifier 5.

Step 1407: Before the repeat times (50 times) of the transmission gap pattern sequence identified by the transmission gap pattern sequence identifier 5 is reached, the Node B sends the terminal through the HS-SCCH order the information of "stopping a transmission gap pattern sequence by way of stopping all currently initiated transmission gap pattern sequences."

The first bit of the 6 bits in the HS-SCCH order takes the value of 1; the second, third and fourth bits of the 6 bits in the HS-SCCH order take the value of 0, for indicating all currently initiated transmission gap pattern sequences; and the fifth bit of the 6 bits in the HS-SCCH order takes the value of 0, for indicating the operation of stopping a transmission gap pattern sequence.

Step 1408: The terminal and the Node B interrupt the transmission gap pattern sequence identified by the transmission gap pattern sequence identifier 5. The terminal and the Node B recover the normal data transmission and reception therebetween.

To implement the method for processing the transmission gap pattern sequence, the disclosure further provides a system for processing the transmission gap pattern sequence, which includes a terminal and a Node B. The terminal or the Node B is configured to control the initiation and stop of the transmission gap pattern sequence. The terminal or the Node B performs the operation of initiating a new transmission gap pattern sequence by way of superimposing on currently initiated transmission gap pattern sequences or by way of clearing all currently initiated transmission gap pattern sequences. The terminal or the Node B performs the operation of stopping a transmission gap pattern sequence by way of stopping a specified transmission gap pattern sequence or by way of stopping all currently initiated transmission gap pattern sequences.

Preferably, the system further includes an RNC, which is configured to agree with the terminal and the Node B in advance on information of the transmission gap pattern sequence for initiating a compressed mode, or to configure the terminal and the Node B with the information of the transmission gap pattern sequence for initiating the compressed mode.

The information of the transmission gap pattern sequence for initiating the compressed mode includes: information of one or more sets of transmission gap pattern sequences. The information of each set of transmission gap pattern sequence at least includes: transmission gap pattern sequence identifier, transmission gap pattern sequence measurement purpose, transmission gap pattern 1 and/or transmission gap pattern 2, the information of transmission gap provided by each type of transmission gap pattern in one transmission gap pattern length, and the repeat times of the transmission gap pattern.

The RNC can configure the terminal with the information of the transmission gap pattern sequence for initiating the compressed mode through RRC protocol layer control signaling, and configure the Node B with the information of the transmission gap pattern sequence through NBAP protocol layer control signaling.

The terminal is further configured to notify the Node B through an HS-DPCCH that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

The Node B is further configured to notify the terminal through an HS-SCCH order that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

According to the method and the system provided by the disclosure, the time for initiating a compressed mode is delayed, the duration of the compressed mode is reduced, thus both system capacity and user throughput are improved.

The above are only the preferred embodiments of the disclosure and are not intended to limit the scope of protection of the disclosure.

## Claims

1. A method for processing a transmission gap pattern sequence, comprising:
controlling an initiation of a transmission gap pattern sequence by a terminal or a Node B, wherein the terminal or the Node B performs an operation of initiating a new transmission gap pattern sequence by way of superimposing on currently initiated transmission gap pattern sequences or by way of clearing all currently initiated transmission gap pattern sequences; and
controlling a stop of the transmission gap pattern sequence by the terminal or the Node B, wherein the terminal or the Node B performs an operation of stopping a transmission gap pattern sequence by way of stopping a specified transmission gap pattern sequence or by way of stopping all currently initiated transmission gap pattern sequences.

2. The method according to claim 1, further comprising the step, performed before performing the operation of initiating a new transmission gap pattern sequence, of:
agreeing with a Radio Network Controller (RNC) in advance on information of the transmission gap pattern sequence for initiating a compressed mode, by the terminal and the Node B; or, configuring the terminal and the Node B with the information of the transmission gap pattern sequence for initiating the compressed mode, by the RNC;
wherein the information of the transmission gap pattern sequence for initiating the compressed mode comprises: information of one or more sets of transmission gap pattern sequences; wherein the information of each set of transmission gap pattern sequence at least comprises: transmission gap pattern sequence identifier, transmission gap pattern sequence measurement purpose, transmission gap pattern 1 and/or transmission gap pattern 2, information of transmission gap provided by each type of transmission gap pattern in one transmission gap pattern length, and repeat times of the transmission gap pattern.

3. The method according to claim 2, further comprising:
configuring the terminal with the information of the transmission gap pattern sequence for initiating the compressed mode through Radio Resource Control (RRC) protocol layer control signaling, by the RNC; and configuring the Node B with the information of the transmission gap pattern sequence through Node B Application Part (NBAP) protocol layer control signaling, by the RNC.

4. The method according to any of claims 1-3, further comprising:
notifying, by the terminal, the Node B through a High Speed Dedicated Physical Control Channel (HS-DPCCH) that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

5. The method according to any of claims 1-3, further comprising:
notifying, by the Node B, the terminal through a High Speed Shared Control Channel (HS-SCCH) order that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

6. A system for processing a transmission gap pattern sequence, comprising a terminal and a Node B, wherein:
the terminal or the Node B is configured to:
control an initiation of a transmission gap pattern sequence, wherein the terminal or the Node B performs an operation of initiating a new transmission gap pattern sequence by way of superimposing on currently initiated transmission gap pattern sequences or by way of clearing all currently initiated transmission gap pattern sequences; and
control a stop of the transmission gap pattern sequence, wherein the terminal or the Node B performs an operation of stopping a transmission gap pattern sequence by way of stopping a specified transmission gap pattern sequence or by way of stopping all currently initiated transmission gap pattern sequences.

7. The system according to claim 6, further comprising an RNC configured to:
agree with the terminal and the Node B in advance on information of the transmission gap pattern sequence for initiating a compressed mode; or
configure the terminal and the Node B with the information of the transmission gap pattern sequence for initiating the compressed mode;
wherein the information of the transmission gap pattern sequence for initiating the compressed mode comprises: information of one or more sets of transmission gap pattern sequences; wherein the information of each set of transmission gap pattern sequence at least comprises: transmission gap pattern sequence identifier, transmission gap pattern sequence measurement purpose, transmission gap pattern 1 and/or transmission gap pattern 2, information of transmission gap provided by each type of transmission gap pattern in one transmission gap pattern length, and repeat times of the transmission gap pattern.

8. The system according to claim 7, wherein the RNC is further configured to configure the terminal with the information of the transmission gap pattern sequence for initiating the compressed mode through RRC protocol layer control signaling, and to configure the Node B with the information of the transmission gap pattern sequence through NBAP protocol layer control signaling.

9. The system according to any of claims 6-8, wherein the terminal is further configured to notify the Node B through an HS-DPCCH that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.

10. The system according to any of claims 6-8, wherein the Node B is further configured to notify the terminal through an HS-SCCH order that the terminal and the Node B perform the operation of initiating a new transmission gap pattern sequence by way of superimposing on the currently initiated transmission gap pattern sequences or by way of clearing all currently initiated transmission gap pattern sequences, and perform the operation of stopping a transmission gap pattern sequence by way of stopping the specified transmission gap pattern sequence or by way of stopping all currently initiated transmission gap pattern sequences.
